# EUROPEAN PATENT APPLICATION

(11) **EP 1 884 927 A2**
(43) Date of publication of application: **06.02.2008**
(21) Application number: 07112915.9
(22) Date of filing: 23.07.2007
(51) Int. Cl.: G11B 5/48

(54) **Head gimbal assembly and hard disk drive having the same**

(30) Priority: 28.07.2006 KR 20060071629
(71) Applicant: Samsung Electronics Co., Ltd., Suwon-si Gyeonggi-do (KR)
(72) Inventor: Hong, Eo Jin, Seongnam-si, Gyeonggi-do (KR); Lee, Haeng Soo, Yeongtong-gu, Suwon-si, Gyeonggi-do (KR); Kim, Woo Sung, Gangnam-gu, Seoul (KR)
(74) Representative: Zimmer, Franz-Josef

(57) **Abstract**

A head gimbal assembly includes a load beam to support a slider where a read/write head is mounted, a base plate arranged close to the load beam, and a step connection portion to connect the load beam and the base plate to be stepped from each other at a side of each of the load beam and the base plate.

## Description

### CROSS-REFERENCE TO RELATED APPLICATIONS

This application claims priority under 35 U.S.C. §119(a) from Korean Patent Application No. 10-2006-0071629, filed on 28 July 2006, in the Korean Intellectual Property Office, the disclosure of which is incorporated herein in its entirety by reference.

### BACKGROUND OF THE INVENTION

### 1. Field of the Invention

The present general inventive concept relates to a hard disk drive, and more particularly, to a head gimbal assembly which can reduce an off-track phenomenon generated due to a vibration of a disk, and a hard disk drive having the head gimbal assembly.

### 2. Description of the Related Art

Hard disk drives (HDDs) formed of electronic and mechanical parts are memory devices to record and reproduce data by converting digital electric pulses to a magnetic field that is more permanent. The HDDs are widely used as auxiliary memory devices of computer systems because of fast access time to a large amount of data.

A conventional HDD includes a disk for recording data, a spindle motor for rotating the disk, and a head stack assembly (HSA) having a read/write head for recording data on the disk and reproducing the recorded data. The HSA is rotated around a pivot shaft by a voice coil motor VCM. The HSA includes an actuator arm coupled to the pivot shaft capable of pivoting, a slider having the read/write head mounted thereon, and a suspension installed on the actuator arm and supporting the slider to be elastically biased toward a surface of the disk. A subassembly consisting of the read/write head, the slider, and the suspension is typically referred to as a head gimbal assembly (HGA).

During the data recording and reproduction in the above conventional structure, a lift force caused by the rotation of the disk and an elastic force of the suspension are applied to the slider with the read/write head. Accordingly, the slider is maintained at a height at which the lift force and the elastic force are balanced above a data zone on the disk surface. Thus, the read/write head mounted on the slider records and reproduces data with respect to a track on the disk while maintaining a predetermined distance from the disk that is rotating. It is important that for the read/write head to smoothly record and reproduce data, the read/write head follow a desired track on the disk.

As a TPI (track per inch; a density in a direction along the rotation of a disk) of the HDD rapidly increases, a track position tolerance is gradually decreased. The track position tolerance or an offset of the read/write head from a track is monitored through a signal that is known as a positional error signal (PES). To successfully read a track, the position error signal, in particular, a non repeatable run out (NRRO) PES, of the read/write head typically needs to be minimized. Also, with a trend of increase TPI, an allowable level of PES is gradually decreased.

The NRRO PES is mostly caused by disk vibration. In detail, when the disk vibrates, the possibility of generation of off-track of the read/write head is further increased. Accordingly, the possibility of generation of a track mis-registration (TMR) phenomenon, i.e., that the read/write head loses track registration, is increased. The TMR is generated when the disk surface is warped upward or downward. The TMR is a statistical standard of a positional error between the read/write head and the center of an adjacent track. In general, each HDD has a TMR budget to achieve for the quality of the HDD.

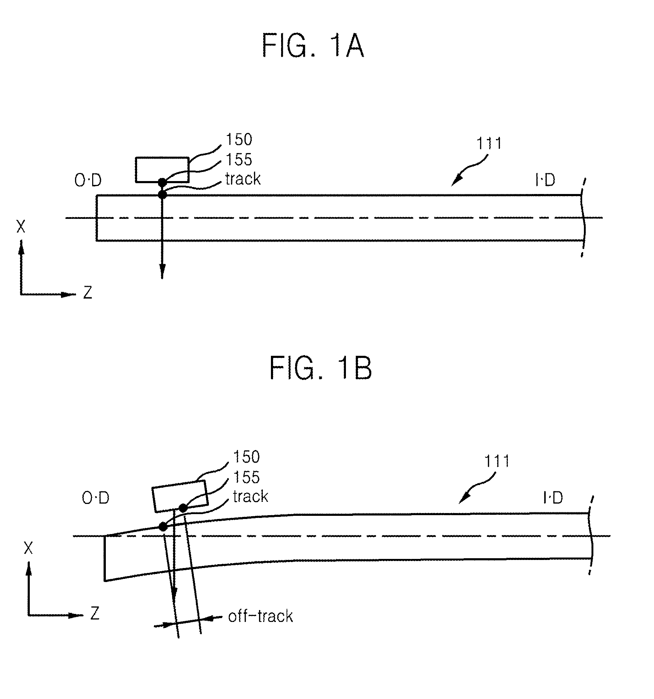

Thus, there have been efforts to reduce the off-track phenomenon due to the disk vibration to achieve the TMR budget. One of the efforts is to use a head gimbal assembly that provides a radial motion. In detail, as illustrated in FIG. 1A, in a normal state, that is, when a disk surface is flat, a read/write head 155 mounted on a slider 150 follows a track on a disk 111 that is rotating to normally record and reproduce data with respect to the disk 111. However, during a vibration of the disk 111, as illustrated in FIG. 1B, the surface of the disk 111 may be warped, for example, as sagging is generated in an outer diameter (OD) area of the disk 111. At this time, the track on the disk 111 is deviated from the track position when the disk surface is flat. Thus, the off-track phenomenon is generated in which the read/write head 155 mounted on the slider 150 does not follow the track and/or is deviated from the track. The off-track causes the TMR phenomenon.

Thus, to prevent the TMR phenomenon, techniques to move the slider of the head gimbal assembly in a radial direction, that is, across the disk, toward the track, have been introduced. One of the techniques is to provide a capability of moving the slider in the radial direction when a load beam is moved vertically by the disk vibration as the head gimbal assembly including, a biased load beam, generates a roll center that is known as a dimple center. Accordingly, the slider is allowed to move not only in a vertical direction but also in a radial direction so that the off-track movement due to the disk vibration is reduced.

According to the above technique, however, since the slider surface is inclined when the disk surface is flat, an air bearing between the slider surface and the disk surface does not formed uniformly. Thus, this technique has a problem of adding a new mechanical instability to a system.

Next, a head gimbal assembly has been introduced which has a slider installed capable of pivoting around an effective roll shaft located in the disk on a plane directed in the radial direction. This method does not cause an irregular air bearing when the disk surface is flat, but requires a structure to support the slider and a complicated mechanical connection to the slider in order to dispose the effective roll shaft in the disk. The complicated mechanical connection increases the possibility of mechanical malfunction and manufacturing costs, and decreases a life expectancy of the HDD.

To solve the above problems, a method of compensating a motion on a plane generated by a vertical deformation of a disk by assembling a portion to connect a load beam of a suspension to a base plate of the suspension at a slant angle has been introduced. In this case, the off-track due to a disk vibration is reduced and a track following ability of the read/write head can be improved, but the structure of the suspension is complicated so that the manufacturing and assembly are complicated.

### SUMMARY OF THE INVENTION

The present general inventive concept provides a head gimbal assembly which can remarkably reduce an off-track phenomenon generated between a read/write head and a disk due to a disk vibration, improve a track following ability of the read/write head, simplify a structure of a suspension, and make manufacturing and assembly easy, and a hard disk drive having the head gimbal assembly.

Additional aspects and advantages of the present general inventive concept will be set forth in part in the description which follows and, in part, will be obvious from the description, or may be learned by practice of the general inventive concept.

The foregoing and/or other aspects and utilities of the present general inventive concept may be achieved by providing a head gimbal assembly including a load beam to support a slider where a read/write head is mounted, a base plate arranged close to the load beam, and a step connection portion to connect the load beam and the base plate to be stepped from each other at a side of each of the load beam and the base plate.

The head gimbal assembly may further include a reference connection portion separated from the step connection portion to connect the load beam and the base plate at another side of each of the load beam and the base plate, wherein the step connection portion has a stepped shape with respect to the reference connection portion so that the slider moves in a radial direction of the disk when the disk vibrates.

The reference connection portion may be a horizontal connection portion which is substantially horizontally arranged with respect to the load beam and the base plate parallel to a connection direction of the step connection portion.

The horizontal connection portion may have substantially the same thickness as that of the step connection portion.

The step connection portion and the reference connection portion may be manufactured separately from the base plate and the load beam, and respectively coupled to the base plate and the load beam.

Side surfaces of the base plate and the load beam to which the step connection portion is coupled may make the same plane and a step portion is provided at one of the base plate and the load beam so that the step connection portion is coupled thereto to be stepped.

The step portion may be provided on the base plate.

The step portion may be recessively formed in a side surface of the base plate to a predetermined depth in a direction along the thickness of the base plate.

The step portion may be provided in a corner area of a side surface of the base plate facing the load beam.

The base plate may include a first base plate, and a second base plate having a cut-off portion formed therein, and the step portion is provided by the cut-off portion when the first and second base plates are coupled to each other.

The first and second base plates may be coupled by welding.

The step portion may be provided by a shim that is coupled to a side surface of the base plate.

The step connection portion may include a plate hinge coupled to the step portion, a load beam hinge coupled to a side of the load beam, and an inclined hinge to connect the plate hinge and the load beam hinge.

The thickness of the plate hinge of the step connection portion may be less than the thickness of the step portion formed on the base plate.

The plate hinge, the load beam hinge, and the inclined hinge may be integrally manufactured.

The foregoing and/or other aspects and utilities of the present general inventive concept may also be achieved by providing a hard disk drive including a disk to record and reproduce data, an actuator arm to move across the disk, and a head gimbal assembly coupled to the actuator arm, wherein the head gimbal assembly may include a load beam to support a slider where a read/write head is mounted, a base plate arranged close to the load beam, and a step connection portion to connect the load beam and the base plate to be stepped from each other at a side of each of the load beam and the base plate.

The head gimbal assembly may further include a reference connection portion separated from the step connection portion and to connect the load beam and the base plate at another side of each of the load beam and the base plate, and the step connection portion may have a stepped shape with respect to the reference connection portion so that the slider moves in a radial direction of the disk when the disk vibrates.

The reference connection portion may be a horizontal connection portion which is substantially horizontally arranged with respect to the load beam and the base plate parallel to a connection direction of the step connection portion.

Side surfaces of the base plate and the load beam to which the step connection portion is coupled may make the same plane and a step portion is provided at one of the base plate and the load beam so that the step connection portion is coupled thereto to be stepped.

The step portion may be provided on the base plate.

The step portion may be recessively formed in a side surface of the base plate to a predetermined depth in a direction along the thickness of the base plate.

The base plate may include a first base plate, and a second base plate having a cut-off portion formed therein, and the step portion is provided by the cut-off portion when the first and second base plates are coupled to each other.

The step portion may be provided by a shim that is coupled to a side surface of the base plate.

The step connection portion may include a plate hinge coupled to the step portion, a load beam hinge coupled to a side of the load beam, and an inclined hinge to connect the plate hinge and the load beam hinge.

The cut-off portion of the second base plate may be formed by cutting part of a side of the second base plate by a predetermined thickness and width.

The foregoing and/or other aspects and utilities of the present general inventive concept may also be achieved by providing a head gimbal assembly usable in a hard disk drive, including a disk, a base plate, a load beam having a slider with a read/write head to record and reproduce data on and from the disk, and a connector to connect the base plate and the load beam to asymmetrically drive the load beam with respect to the base plate when a surface of the disk is warped.

The connector may include a first portion to connect the load beam to the base plate, and a second portion spaced apart from the first portion to connect the load beam and the base plate, and the first portion and the second portion are stepped with respect to each other to asymmetrically drive the load beam with respect to the base plate when the disk surface is warped.

The connector may include a flexure to connect the load beam to the base plate to drive the load beam in a radial direction of the disk when the disk vibrates.

The load beam may be driven asymmetrically to the right and left according to a warp direction of the disk.

The foregoing and/or other aspects and utilities of the present general inventive concept may also be achieved by providing a hard disk drive, including a disk, an actuator arm, a base plate coupled to the actuator arm, a load beam having a slider with a head to record and reproduce data on and from the disk, and a connector to connect the base plate and the load beam, and having a first end which is coupled to the load beam and disposed on a common plane of the base plate and the load beam, and a second end extended from the first end disposed on a second plane of the base plate which is coupled to the base plate and spaced-apart from the common plane of the base plate and the load beam.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIGS. 1A and 1 B are view illustrating an off-track state of a read/write head during a vibration of a disk in a convention HDD;

FIG. 2 is a perspective view illustrating an HDD according to an embodiment of the present general inventive concept;

FIG 3. is perspective view illustrating the reverse of a head gimbal assembly of the HDD illustrated in FIG. 2 ; and FIG. 4 is perspective view illustrating a head gimbal assembly of the HDD illustrated in FIG. 2;

FIG. 5 is a perspective view illustrating a base plate of a suspension of the head gimbal assembly illustrated in FIG. 3;

FIGS. 6A and 6B are views illustrating a movement state of a read/write head during a disk vibration in the HDD illustrated in FIG. 2;

FIG. 7 is an exploded perspective view illustrating a base plate of a head gimbal assembly of an HDD according to another embodiment of the present general inventive concept;

FIG. 8 is an assembled perspective view of the base plate illustrated in FIG. 7; and

FIG. 9 is a perspective view illustrating a head gimbal assembly of an HDD according to yet another embodiment of the present general inventive concept.

### DETAILED DESCRIPTION OF THE PREFERRED EMBODIMENTS

Reference will now be made in detail to embodiments of the present general inventive concept, examples of which are illustrated in the accompanying drawings, wherein like reference numerals refer to the like elements throughout. The embodiments are described below in order to explain the present general inventive concept by referring to the figures.

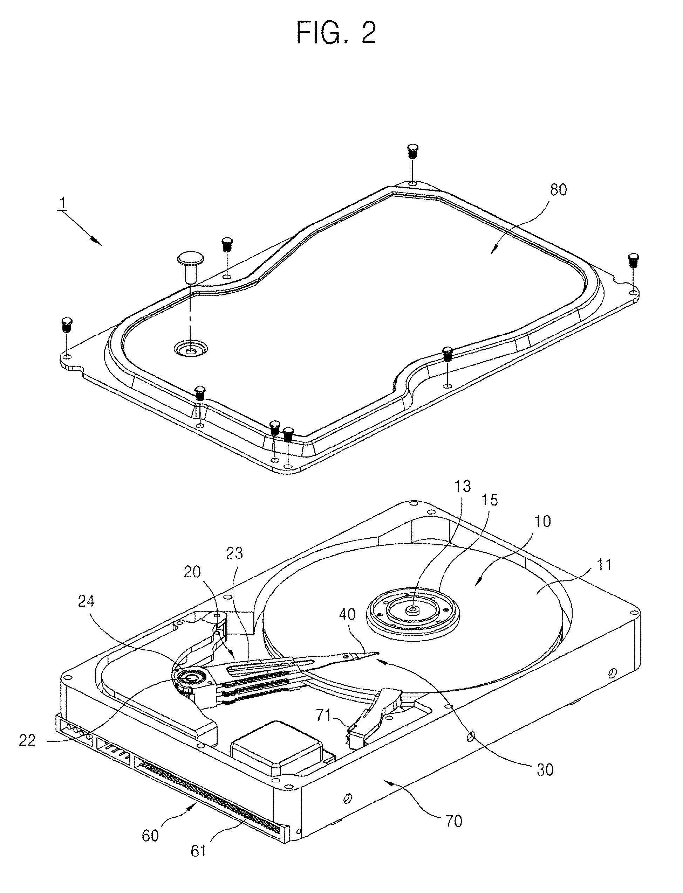

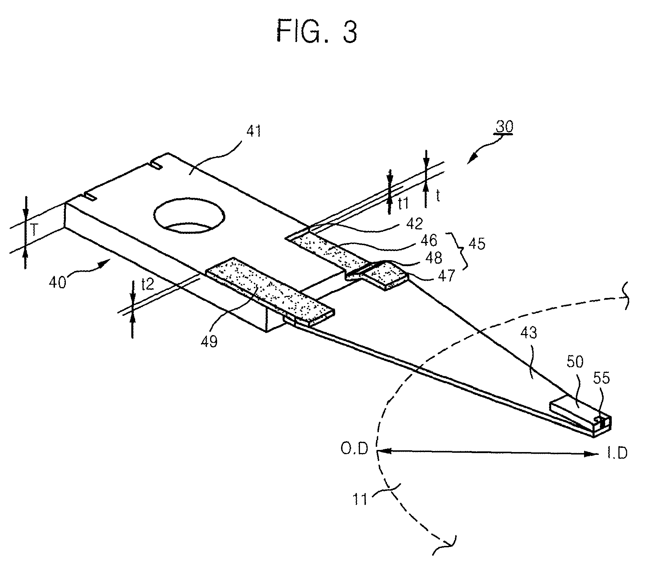

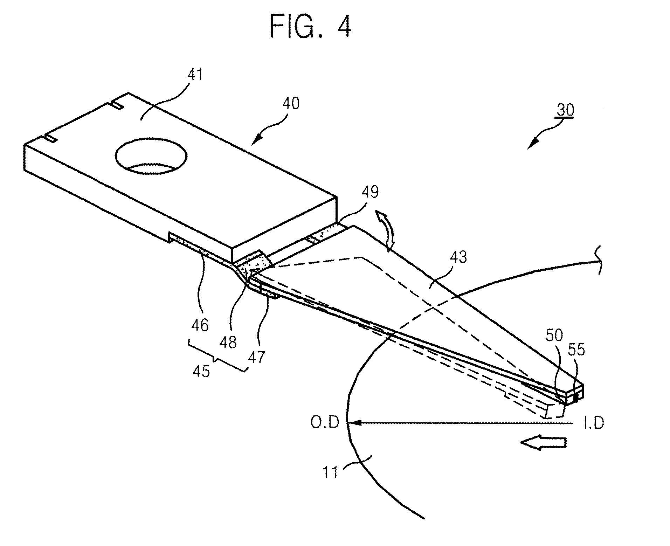

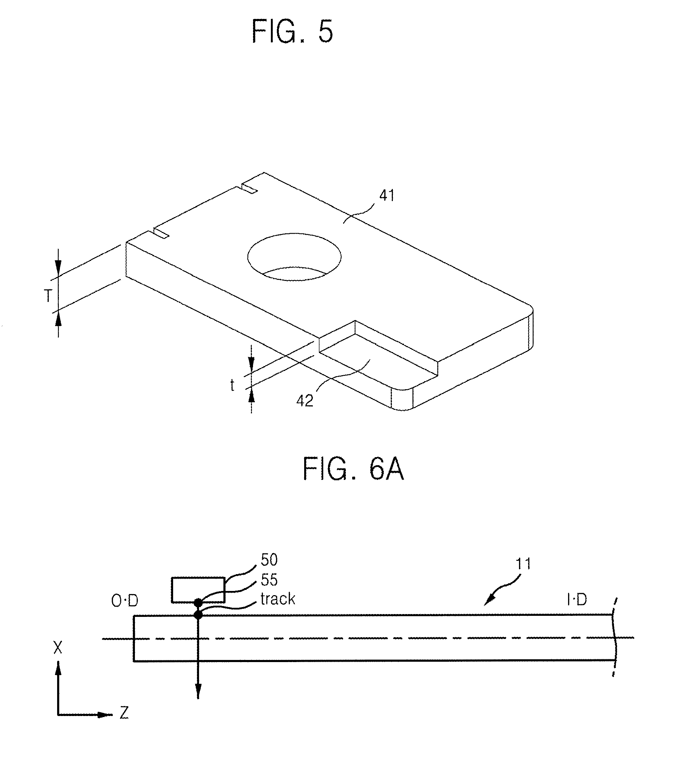

FIG. 2 is a perspective view illustrating an HDD 1 according to an embodiment of the present general inventive concept, FIGS. 3 and 4 are perspective views illustrating a head gimbal assembly (HGA) 30 of the HDD 1 illustrated in FIG. 2, FIG. 5 is a perspective view illustrating a base plate of a suspension 40 of the head gimbal assembly 30 illustrated in FIG. 3. Referring to FIGS. 2, 3, 4, and 5, the hard disk drive (HDD) 1 may include a disk pack 10, a printed circuit board assembly (PCBA) 60, a base 70, a cover 80, and a head stack assembly (HSA) 20.

The disk pack 10 may include a shaft 13 to form a rotation center of a disk 11, a spindle motor hub (not illustrated) provided outside the shaft 13 in a radial direction to support the disk 11, a spindle motor (not illustrated) to rotate the spindle motor hub, a clamp 15 coupled to the upper portion of the spindle motor hub, and a clamp screw (not illustrated) to press the clamp 15 to allow the disk 11 to be fixed to the spindle motor hub.

The PCBA 60 may include a printed circuit board (PCB, not illustrated) having a plate shape and a PCB connector 61 provided at a side of the PCB. The PCB may include a plurality of chips and circuits (not illustrated) to control the disk 11 and a read/write head 55 to communicate signals with an external device through the PCB connector 61.

The base 70 may constitute a frame, on which the disk pack 10, the HSA 20, and the PCBA 60 are assembled. A ramp 71 where the read/write head 55 is parked when power is cut off may be installed on the base 70. The cover 80 covers the upper surface of the base 70 and protects the disk 11 and the HSA 20.

The HSA 20 may include the read/write head 55 to write data to the disk 11 or to read the recorded data, a slider 50 on which the read/write head 55 is mounted, the suspension 40 to which the slider 50 is coupled, an actuator arm 23 to move across the disk 11 around a pivot shaft 22 as a center to allow the read/write head 55 to access data on the disk 11, the suspension 40 can be coupled to an end portion of the actuator arm 23, a pivot shaft holder 24 to rotatably support the pivot shaft 22 and to support the actuator arm 23 which may be coupled to the pivot shaft holder 24, and a bobbin (not illustrated) provided in the opposite direction of the actuator arm 23 with respect to the pivot shaft holder 24 between a voice coil motor (VCM) and a magnet (not illustrated) and around which a VCM coil (not illustrated) is wound. In the present embodiment, the read/write head 55, the slider 50, and the suspension 40 can constitute a head gimbal assembly (HGA) 30.

The suspension 40 may include a base plate 41, a load beam 43, a step connection portion 45 to connect the base plate 41 and the load beam 43 to be stepped from each other, and a reference connection portion 49 to connect the base plate 41 and the load beam 43. The reference connection portion 49 may be a horizontal connection portion, a non-stepped portion, or a flat plate shape as illustrated in FIG. 3. This structure of the suspension 40 effectively prevents an off-track phenomenon that is generated during the vibration of the disk 11, which will be described in detail later.

The read/write head 55 reads or writes information with respect to the disk 11 that is rotating by detecting a magnetic field formed on the surface of the disk 11 or magnetizing the surface of the disk 11. The read/write head 55 consists of a write head to magnetize the disk 11 and a read head to detect the magnetic field of the disk 11 to read and write data by itself.

The voice coil motor (VCM) is a drive motor to pivot the actuator arm 23 to move the read/write head 55 to a desired position on the disk 11 according to the Fleming's left hand rule, that is, a principle that a force is generated when current flows in a conductive body existing in a magnetic field. Accordingly, when current is applied to the VCM coil that is located between magnets, a force is applied to the bobbin so as to pivot the bobbin. Thus, the actuator arm 23 extending from the pivot shaft holder 24 in the opposite direction pivots so that the read/write head 55 supported at an end portion thereof moves across the disk 11 to search a track and access the searched track. The accessed information is signal processed.

As illustrated in FIGS. 3 through 5, the HGA 30 may include the suspension 40, the slider 50 supported by the suspension 40, and the read/write head 55 mounted on the slider 50. Although it is not illustrated, the suspension 40 may typically include at least one pair of conductive write wires and at least one pair of conductive read wires. The suspension 40 may include the base plate 41, the load beam 43 arranged at one side of the base plate 41, and the step connection portion 45 and the horizontal connection portion 49 to connect the base plate 41 and the load beam 43.

The base plate 41 can be formed of stainless steel to have a rectangular shape and has one end connected to the actuator arm 23 and the other end connected to the load beam 43. A step portion (or a recess portion) 42 can be recessively formed to a predetermined depth in a surface of the base plate 41, to which one side of the step connection portion 45 is coupled. The step portion 42, as illustrated in FIG. 5, can be recessively formed to a predetermined depth t in the base plate 41 in a direction T along a thickness of the base plate 41. A recess depth of the step portion 42 can be formed to have a predetermined depth t in the thickness T of the base plate 41.

That is, first ends of the step connection portion 45 and the reference connection portion 49 are disposed on the same plane of the load beam 43, and second ends of the step connection portion 45 and horizontal connection portion 49 are disposed on different planes of the base plate 41 which are spaced-apart by a depth in a vertical direction of a thickness of the base plate 41. The load beam 43 can have the same plane as the base plate 41. However, the load beam 43 may be rotated with respect to the base plate 41 according to a deformation of the step connection portion 45. Widths of the step connection portion 45 and the reference connection portion 49 can be the same. Alternatively, the widths of the connection portion 45 and the reference connection portion 49 can be different. Similarly, the thicknesses of the step connection portion 45 and the reference connection portion 49 can be the same. Moreover they can be different.

Also, the position of the step portion 42 can be appropriately chosen. In the present exemplary embodiment, as illustrated in FIGS. 3 through 4, the step portion 42 can be formed at one side of the base plate 41 facing the disk 11, for example, in a corner area of the base plate 41 facing the load beam 43. The shape of the bottom surface of the step portion 42 can be roughly rectangular. The step portion 42 can be directly provided during the molding of the base plate 41 or provided by etching or cutting part of the surface of the base plate 41 that is molded. Typically, the step portion 42 is easily manufactured in a simple method and the connection or assembly to the step connection portion 45 is easily made.

The load beam 43 can be manufactured of stainless steel like the base plate 41 and has one end connected to the base plate 41 and the other end to elastically support the slider 50 where the read/write head 55 is mounted. Thus, when the disk 11 rotates, the slider 50 can rise upward from the disk 11 by an air bearing formed between the slider 50 and the surface of the disk 11 and moves across the disk 11.

The step connection portion 45 connects the load beam 43 to the base plate 41 to be stepped from each other, and the horizontal connection portion 49 horizontally connects the load beam 43 and the base plate 41. Accordingly, such a structure minimizes the off-track by driving the load beam 43 asymmetrically to the left and right during the vibration of the disk 11. That is, when the surface of the disk 11 is flat, uniform air bearing is formed. When the surface of the disk 11 is warped due to the vibration of the disk 11, the off-track phenomenon can be minimized, which is generated when the slider 50 supported by the load beam 43 is moved across the surface of the disk 11 and vibrated, as the step connection portion 45 and the horizontal connection portion 49 are deformed different from each other.

The step connection portion 45 may include a plate hinge 46, a load beam hinge 47, and an inclined hinge 48. The plate hinge 46, the load beam hinge 47, and the inclined hinge 48 can be integrally formed of stainless steel and can have a same thickness t1 in the present exemplary embodiment. The plate hinge 46 is coupled to the step portion 42 recessively formed in the base plate 41. Thus, when the cross section of the plate hinge 46 has a rectangular shape corresponding to the shape of the step portion 42, the plate hinge 46 can be closely coupled to the step portion 42. The plate hinge 46 can have the thickness t1 that is less than the recess depth t of the step portion 42. Thus, the thickness t1 of the plate hinge 46 can be determined within a range that is less than the recess depth t of the step portion 42.

The load beam hinge 47 is coupled to a side of the load beam 43. The load beam hinge 47 contacts and is coupled to the side surface of the load beam 43 that faces the surface of the disk 11. The inclined hinge 48 is located between the base plate 41 and the load beam 43 to substantially connect the base plate 41 and the load beam 43 to be stepped. Thus, the inclined hinge 48 can be inclined at a predetermined angle with respect to horizontal surfaces of the base plate 41 and the load beam 43. An inclination angle of the inclined hinge 48 can be appropriately designed to follow an arbitrary track by compensating for the amount of off-track of the read/write head 55 and the disk 11 during the vibration of the disk 11. That is, the angle of the inclined hinge 48 can be determined by anticipating the off-track generated between the read/write head 55 and the disk 11.

The horizontal connection portion 49 horizontally connects the load beam 43 and the other side of the base plate 41 parallel to the connection direction of the step connection portion 45. Both end portions of the horizontal connection portion 49 are coupled to a side surface of the base plate 41 and a side surface of the load beam 43 at a position separated from the step connection portion 45. In the present exemplary embodiment, the horizontal connection portion 49 can have a same thickness t2 as the thickness t1 of the step connection portion 45.

In the present exemplary embodiment, when the horizontal connection portion 49 and the step connection portion 45 connect the load beam 43 and the base plate 41, the surfaces of the base plate 41 and the load beam 43 facing the surface of the disk 11 make substantially the same plane. As the step portion 42 recessively formed from the surface of the base plate 41 is formed and the base plate 41 and the load beam 43 are connected by the step connection portion 45 and the horizontal connection portion 49, the load beam 43 can be driven asymmetrical to the left and right during vibration as illustrated in FIG. 4. Accordingly, a diagonal motion of the suspension 40 in the outer diametric direction of the disk 11 is possible so that the slider 50 can move in the radial direction. Therefore, the off-track phenomenon and the track mis-registration (TMR) phenomenon due to the vibration of the disk 11 can be reduced. Furthermore, the structure of the suspension 40 is simple and the assembly and manufacturing of the suspension 40 are made easy.

In the operation of the HDD 1 configured as above, FIG. 6A illustrates a movement state of the read/write head during the vibration of the disk in the HDD 1. When the read/write head 55 mounted on the slider 50 is in a normal state, that is, when the surface of the disk 11 is flat, the read/write head 55 follows an arbitrary track on the disk 11 to normally record and store data on the disk 11. That is, when the surface of the disk 11 is flat, the slider 50 supported by the load beam 43 moves vertically while the surface of the slider 50 is maintained horizontal with respect to the surface of the disk 11. Thus, the read/write head 55 mounted on the slider 50 follows the track so that data can be normally recorded and stored.

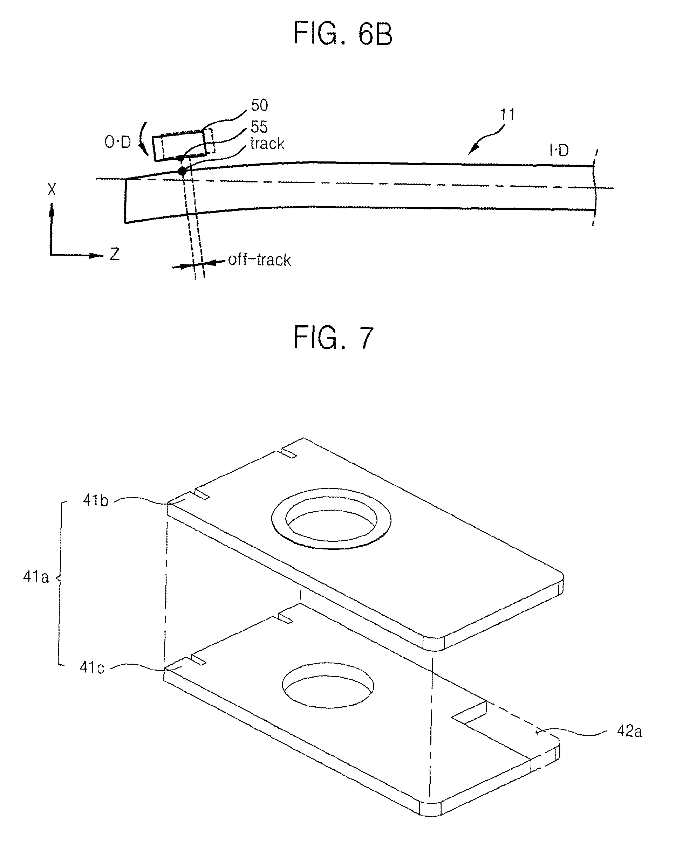

When vibrations are generated in the disk 11, the surface of the disk 11 may be warped. FIG. 6B illustrates a case when the disk 11 sags in the outer diametric (OD) area. In this case, when the read/write head 55 mounted on the slider 50 does not move in the radial direction, as indicated by a dotted line, the off-track that the read/write head 55 does not follow a track may be generated.

In the present exemplary embodiment, when the surface of the disk 11 is warped, the load beam 43 is driven asymmetrically to the left and right because of structures of the step connection portion 45 and the horizontal connection portion 49, so that the slider 50 is moved in the radial direction of the disk 11. Thus, as indicated by a solid line in FIG. 6B, the read/write head 55 is moved in the radial direction toward the track to follow to minimize the off-track phenomenon and follow the track.

Although it is not illustrated, when the surface of the disk 11 is warped upward, the same phenomenon is generated. In a normal state, that is, when the surface of the disk 11 is flat, the slider 50 is moved vertically while the surface of the slider 50 is maintained horizontal above the surface of the disk 11. When the surface of the disk 11 is warped upward due to the vibration, the slider 50 is moved in the radial direction toward the track by the asymmetric driving to the left and right of the load beam 43. Thus, the read/write head 55 minimizes the off-track phenomenon and follows the track.

As described above, even when the vibration of the disk 11causes non repeatable run out (NRRO), the off-track phenomenon can be reduced by the structure described above simplifying the assembly and manufacturing of the suspension 40. Also, a position error signal (PES) can be reduced, and further, a higher TPI can be realized.

An HDD according to another embodiment of the present general inventive concept will be described with reference to the accompanying drawings. In the following description, only portions different from the previous exemplary embodiment will be described and descriptions of the same portions will be omitted for brevity of the detailed description.

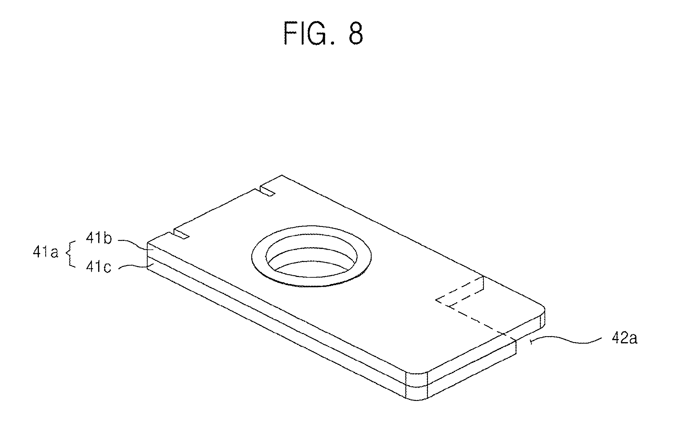

FIG. 7 is an exploded perspective view illustrating a base plate of a head gimbal assembly of an HDD according to another embodiment of the present general inventive concept. FIG. 8 is an assembled perspective view of the base plate illustrated in FIG. 7. Referring to FIGS. 7 and 8, a base plate 41a of a head gimbal assembly of an HDD can be provided by manufacturing and combining a first base plate 41 b and a second base plate 41 c.

The first base plate 41a can have a predetermined thickness and can make an upper plate of the base plate 41 a. A cut-off portion 42a can be formed at a side of the second base plate 41c by cutting a part of the second base plate 41c by a predetermined thickness and width. Thus, a step portion (not illustrated) is provided by the cut-off portion 42a when the first and second base plates 41 b and 41 c are combined to each other.

According to the present general inventive concept, the combination of the first and second base plates 41b and 41c can be made by various methods, for example, the first and second base plates 41 b and 41 c can be combined by welding. Since the first and second base plates 41 b and 41c can be mainly formed of stainless steel, the first and second base plates 41 b and 41 c can be welded by electric spot welding.

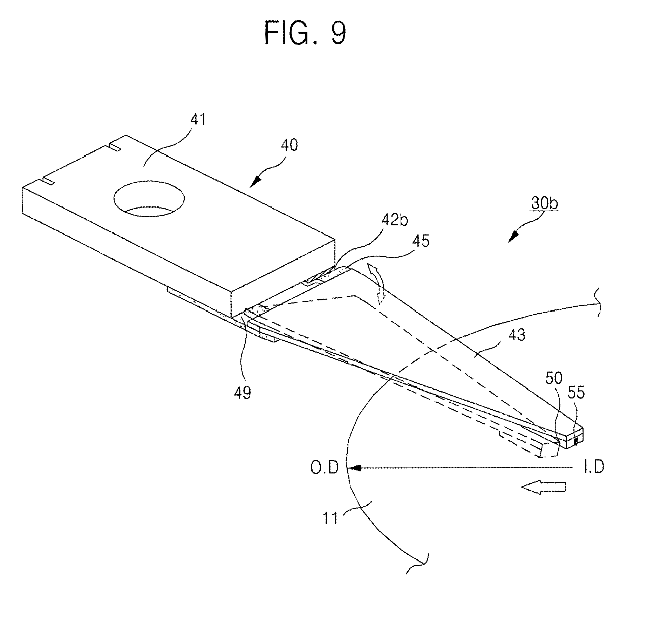

FIG. 9 is a perspective view illustrating a head gimbal assembly of an HDD according to yet another embodiment of the present general inventive concept. As illustrated in FIG. 9, a stepped portion of a head gimbal assembly 30b of an HDD can be provided by a shim 42b coupled to a side surface of a base plate 41. That is, the shim 42b can be coupled to the side surface of the base plate 41 by welding and a plate hinge (not illustrated) of a step connection portion 45 is coupled to the shim 42b. Since the shim 42b can be coupled to the base plate 41 by welding to form the step portion, the manufacturing and assembly are made easy.

In the above-described embodiments, a slider is coupled to a load beam, but the present general inventive concept is not limited thereto and it may be possible that a flexure is coupled to the load beam and the slider is coupled to the flexure. Also, although in the above-described embodiments the reference connection portion is the horizontal connection portion, the present general inventive concept is not limited thereto, and the reference connection portion may be a stepped reference connection portion that has a step different from the step connection portion so that the stepped reference connection portion can minimize the off-track phenomenon generated during vibration by driving the load beam asymmetrically to the left and right when the disk surface is warped.

According to the above-described embodiments of the present general inventive concept, an off-track phenomenon generated between a read/write head and a disk by a vibration of the disk can be remarkably reduced. Also, a track following ability of the read/write head can be improved and a structure of a suspension can be simplified so that a manufacturing and assembly are made easy. Thus, a PES by a NRRO can be reduced so that a TMR budget of a high capacity HDD can be achieved.

Although a few embodiments of the present general inventive concept have been shown and described, it will be appreciated by those skilled in the art that changes may be made to these embodiments without departing from the principles and spirit of the general inventive concept, the scope of which is defined by in the appended claims and their equivalents.

## Claims

1. A head gimbal assembly comprising:
a load beam to support a slider where a read/write head is mounted;
a base plate arranged close to the load beam; and
a step connection portion to connect the load beam and the base plate to be stepped from each other at a side of each of the load beam and the base plate.

2. The head gimbal assembly of claim 1, further comprising:
a reference connection portion separated from the step connection portion to connect the load beam and the base plate at another side of each of the load beam and the base plate,
wherein the step connection portion has a stepped shape with respect to the reference connection portion so that the slider moves in a radial direction of the disk when the disk vibrates.

3. The head gimbal assembly of claim 2, wherein the reference connection portion is a horizontal connection portion which is substantially horizontally arranged with respect to the load beam and the base plate parallel to a connection direction of the step connection portion.

4. The head gimbal assembly of claim 3, wherein the horizontal connection portion has substantially the same thickness as that of the step connection portion.

5. The head gimbal assembly of claim 2, wherein the step connection portion and the reference connection portion are manufactured separately from the base plate and the load beam, and respectively coupled to the base plate and the load beam.

6. The head gimbal assembly of claim 1, wherein side surfaces of the base plate and the load beam to which the step connection portion is coupled make the same plane and a step portion is provided at one of the base plate and the load beam so that the step connection portion is coupled thereto to be stepped.

7. The head gimbal assembly of claim 6, wherein the step portion is provided on the base plate.

8. The head gimbal assembly of claim 7, wherein the step portion is recessively formed in a side surface of the base plate to a predetermined depth in a direction along the thickness of the base plate.

9. The head gimbal assembly of claim 8, wherein the step portion is provided in a corner area of a side surface of the base plate facing the load beam.

10. The head gimbal assembly of claim 7, wherein:
the base plate comprises:
a first base plate, and
a second base plate having a cut-off portion formed therein; and
the step portion is provided by the cut-off portion when the first and second base plates are coupled to each other.

11. The head gimbal assembly of claim 10, wherein the first and second base plates are coupled by welding.

12. The head gimbal assembly of claim 7, wherein the step portion is provided by a shim that is coupled to a side surface of the base plate.

13. The head gimbal assembly of claim 7, wherein the step connection portion comprises:
a plate hinge coupled to the step portion;
a load beam hinge coupled to a side of the load beam; and
an inclined hinge to connect the plate hinge and the load beam hinge.

14. The head gimbal assembly of claim 13, wherein the thickness of the plate hinge of the step connection portion is less than the thickness of the step portion formed on the base plate.

15. The head gimbal assembly of claim 13, wherein the plate hinge, the load beam hinge, and the inclined hinge are integrally manufactured.

16. A hard disk drive comprising:
a disk to record and reproduce data;
an actuator arm to move across the disk; and
a head gimbal assembly coupled to the actuator arm,
wherein the head gimbal assembly comprises:
a load beam to support a slider where a read/write head is mounted,
a base plate arranged close to the load beam, and
a step connection portion to connect the load beam and the base plate to be stepped from each other at a side of each of the load beam and the base plate.

17. The hard disk drive of claim 16, wherein the head gimbal assembly further comprises:
a reference connection portion separated from the step connection portion to connect the load beam and the base plate at another side of each of the load beam and the base plate, and the step connection portion has a stepped shape with respect to the reference connection portion so that the slider moves in a radial direction of the disk when the disk vibrates.

18. The hard disk drive of claim 17, wherein the reference connection portion is a horizontal connection portion which is substantially horizontally arranged with respect to the load beam and the base plate parallel to a connection direction of the step connection portion.

19. The hard disk drive of claim 16, wherein side surfaces of the base plate and the load beam to which the step connection portion is coupled make the same plane and a step portion is provided at one of the base plate and the load beam so that the step connection portion is coupled thereto to be stepped.

20. The hard disk drive of claim 19, wherein the step portion is provided on the base plate.

21. The hard disk drive of claim 20, wherein the step portion is recessively formed in a side surface of the base plate to a predetermined depth in a direction along the thickness of the base plate.

22. The hard disk drive of claim 20, wherein:
the base plate comprises:
a first base plate, and
a second base plate having a cut-off portion formed therein; and the step portion is provided by the cut-off portion when the first and second base plates are coupled to each other.

23. The hard disk drive of claim 20, wherein the step portion is provided by a shim that is coupled to a side surface of the base plate.

24. The hard disk drive of claim 20, wherein the step connection portion comprises:
a plate hinge coupled to the step portion;
a load beam hinge coupled to a side of the load beam; and
an inclined hinge to connect the plate hinge and the load beam hinge.

25. The hard disk drive of claim 22, wherein the cut-off portion of the second base plate is formed by cutting part of a side of the second base plate by a predetermined thickness and width.

26. A head gimbal assembly usable in a hard disk drive, comprising:
a base plate;
a load beam having a slider with a read/write head to record and reproduce data on and from a disk; and
a connector to connect the base plate and the load beam to asymmetrically drive the load beam with respect to the base plate when a surface of the disk is warped.

27. The head gimbal assembly of claim 26, wherein:
the connector comprises:
a first portion to connect the load beam to the base plate, and
a second portion spaced apart from the first portion to connect the load beam and the base plate; and
the first portion and the second portion are stepped with respect to each other to asymmetrically drive the load beam with respect to the base plate when the disk surface is warped.

28. The head gimbal assembly of claim 26, wherein the connector comprises:
a flexure to connect the load beam to the base plate to drive the load beam in a radial direction of the disk when the disk vibrates.

29. The head gimbal assembly of claim 26, wherein the load beam is driven asymmetrically to the right and left according to a warp direction of the disk.

30. A hard disk drive, comprising:
a disk;
an actuator arm;
a base plate coupled to the actuator arm;
a load beam having a slider with a read/write head to record and reproduce data on and from the disk; and
a connector to connect the base plate and the load beam, and having a first end which is coupled to the load beam and disposed on a common plane of the base plate and the load beam, and a second end extended from the first end disposed on a second plane of the base plate which is coupled to the base plate and spaced-apart from the common plane of the base plate and the load beam.
